# FASCICULE DE BREVET EUROPEEN

(11) **EP 2 778 360 B1**
(45) Date de publication et mention de la délivrance du brevet: **03.05.2017**
(21) Numéro de dépôt: 14158590.1
(22) Date de dépôt: 10.03.2014
(51) Int. Cl.: F01N 3/20

(54) **DISPOSITIF D'INJECTION D'UN AGENT RÉDUCTEUR À L'INTERIEUR D'UNE LIGNE D'ÉCHAPPEMENT**
Vorrichtung zum Einspritzen eines Reduktionsmittels in eine Abgasanlage
Device for injecting a reducing agent into an exhaust line

(30) Priorité: 12.03.2013 FR 1352168
(43) Date de publication de la demande: 17.09.2014
(73) Titulaire: PEUGEOT CITROËN AUTOMOBILES SA, 78140 Vélizy-Villacoublay (FR)
(72) Inventeur: Bozian, Mohamed, 95170 DEUIL LA BARRE (FR)

(56) Documents cités:
- EP-A1- 1 785 606
- EP-A1- 2 133 527
- WO-A1-2012/084721
- US-A1- 2003 079 467

## Description

L'invention porte sur un dispositif d'injection d'un agent réducteur à l'intérieur d'une ligne d'échappement équipant une ligne d'échappement d'un moteur à combustion interne dont est pourvu un véhicule automobile, le dispositif d'injection comprenant une réserve d'agent réducteur et un injecteur de l'agent réducteur à l'intérieur de la ligne d'échappement entre lesquels est interposé un organe de délivrance.

Le document US 2011/0094206 décrit un dispositif d'injection d'un agent réducteur à l'intérieur d'une ligne d'échappement équipant un moteur à combustion interne dont est pourvu un véhicule automobile. Le dispositif d'injection comprend un support associé à un injecteur. Le dispositif d'injection comprend également un élément tubulaire perforé qui est couplé au support. L'élément tubulaire comprend une entrée, une sortie et une paroi conformée en cône qui s'étend depuis l'entrée vers la sortie, la paroi étant pourvue d'une pluralité de perforations. Le document US 2003/079467 décrit un injecteur de composants chimiques dans une ligne d'échappement associé à un moyen pour créer des turbulences favorisant la dispersion des composants dans le flux des gaz. Ce moyen se présente sous la forme d'un cône perforé se plaçant autour de l'extrémité de l'injecteur débouchant dans la ligne d'échappement.

Un problème général posé par un tel dispositif réside dans le fait qu'il mérite d'être amélioré pour optimiser une réduction d'oxydes d'azote véhiculés par des gaz d'échappement circulant à l'intérieur de la ligne d'échappement. Plus particulièrement, il est souhaitable de disposer d'un dispositif d'injection qui offre un bon compromis entre une réduction optimisée des oxydes d'azote véhiculés par les gaz d'échappement et une consommation énergétique d'un tel dispositif d'injection pour décomposer l'agent réducteur.

Le but de la présente invention est de proposer un dispositif d'injection qui répond aux inconvénients susvisés.

Un dispositif de la présente invention est un dispositif d'injection d'un agent réducteur à l'intérieur d'une ligne d'échappement équipant un moteur à combustion interne dont est pourvu un véhicule automobile. Le dispositif d'injection comprend une réserve d'agent réducteur et un injecteur de l'agent réducteur à l'intérieur de la ligne d'échappement. Un organe de délivrance est interposé entre la réserve et l'injecteur. L'organe de délivrance comprend au moins une rampe de délivrance de l'agent réducteur.

L'invention a donc pour objet un dispositif d'injection d'un agent réducteur à l'intérieur d'une ligne d'échappement équipant un moteur à combustion interne dont est pourvu un véhicule automobile, le dispositif d'injection comprenant une réserve d'agent réducteur et un injecteur de l'agent réducteur qui comporte une extrémité de délivrance destinée à être logée à l'intérieur de la ligne d'échappement, et un organe de délivrance étant interposé entre la réserve et l'injecteur, l'organe de délivrance comprenant au moins une rampe de délivrance de l'agent réducteur, tel que le dispositif d'injection est pourvu d'au moins un premier moyen de chauffage de l'agent réducteur apte à délivrer une puissance de chauffe sous forme d'un cône de chauffage qui enveloppe l'extrémité de délivrance destinée à être logée à l'intérieur de la ligne d'échappement, ledit cône de chauffage étant pourvu d'au moins une perforation pour le passage des gaz d'échappement à son travers

Selon la présente invention, le dispositif d'injection est pourvu d'au moins un moyen de chauffage de l'agent réducteur.

Un premier moyen de chauffage équipe avantageusement une extrémité de délivrance que comporte l'injecteur.

Un deuxième moyen de chauffage équipe avantageusement l'organe de délivrance.

Le moyen de chauffage est avantageusement apte à délivrer une puissance de chauffe comprise entre 100 W et 2 000 W.

Le moyen de chauffage est préférentiellement apte à délivrer une puissance de l'ordre de 1 200 W à +/- 10% près.

Le moyen de chauffage comprend par exemple au moins une résistance chauffante par effet Joule.

Le moyen de chauffage comprend par exemple au moins une bobine de chauffage par induction.

Une ligne d'échappement de la présente invention est principalement reconnaissable en ce que la ligne d'échappement est équipée d'un tel dispositif d'injection.

Un véhicule automobile de la présente invention est principalement reconnaissable en ce que le véhicule automobile comprend un moteur à combustion interne pourvu d'une telle ligne d'échappement.

Un procédé de mise en oeuvre du moyen de chauffage constitutif d'un tel dispositif d'injection est principalement caractérisé en ce que la mise en oeuvre du moyen de chauffage est placé sous la dépendance d'une température d'un catalyseur de réduction logé à l'intérieur de la ligne d'échappement.

D'autres caractéristiques et avantages de la présente invention apparaîtront à la lecture de la description qui va en être faite d'exemples de réalisation, en relation avec les figures des planches annexées, dans lesquelles :
La figure 1 est une vue schématique d'une ligne d'échappement de la présente invention.
La figure 2 est une vue schématique d'un injecteur d'un agent réducteur à l'intérieur de la ligne d'échappement, telle celle illustrée sur la figure 1, dont est pourvu un moteur à combustion interne équipant un véhicule automobile.

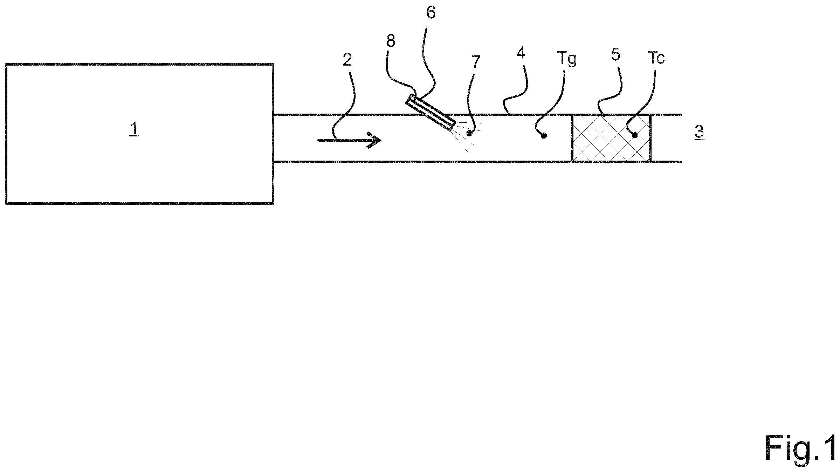

Sur la figure 1, un véhicule automobile est couramment équipé d'un moteur à combustion interne 1 pour pourvoir à son déplacement. Le moteur à combustion interne 1 produit des gaz d'échappement 2 qui sont évacués hors du moteur à combustion interne 1 vers un environnement extérieur 3 par l'intermédiaire d'une ligne d'échappement 4. Les gaz d'échappement 2 comprennent notamment des oxydes d'azote NOₓ (x étant égal à 1 ou 2) qu'il est souhaitable de ne pas rejeter vers l'environnement extérieur 3. Pour ce faire, la ligne d'échappement 4 loge un catalyseur de réduction 5 à l'intérieur duquel les oxydes d'azote sont réduits préalablement à leur évacuation vers l'environnement extérieur 3. Pour améliorer la réduction des oxydes d'azote à l'intérieur du catalyseur de réduction 5, la ligne d'échappement 4 est pourvue d'un dispositif d'injection 6 d'un agent réducteur 7 à l'intérieur de la ligne d'échappement 4. Le dispositif d'injection 6 est placé sur la ligne d'échappement 4 entre le moteur à combustion interne 1 et le catalyseur de réduction 5. Un tel dispositif d'injection 6 couplé au catalyseur de réduction 5 est particulièrement utile et efficace, lorsque les gaz d'échappement 2 au niveau du catalyseur de réduction 5 présentent une température de catalyseur T_{c} qui est comprise entre 150°C et 175°C. L'injecteur débouche de préférence dans une zone dite tronçon d'injection de la ligne d'injection qui peut être équipée de moyens destinés à faciliter le mélange de l'urée décomposée en ammoniac et/ou en cours de décomposition en ammoniac dans le flux des gaz d'échappement avant que l'ensemble ne pénètre dans le catalyseur de réduction. Par exemple, on peut choisir un tronçon d'injection tel que décrit dans le brevet WO2010/146285.

La ligne d'échappement 4 est notamment une ligne d'échappement telle que celle décrite dans le document FR 2,947,003 qui comprend deux monolithes amont et aval de traitement des gaz d'échappement 2 circulant dans la ligne d'échappement 4, les deux monolithes amont et aval étant placés en série dans la ligne d'échappement 4, un tronçon d'injection disposé entre une face amont définie par le monolithe amont et une face aval définie par le monolithe aval et comprenant un canal de circulation d'un flux de gaz d'échappement s'étendant de la face amont à la face aval, le canal ayant une ligne centrale présentant une longueur déterminée entre les faces amont et aval, le tronçon d'injection comportant le dispositif d'injection 6 de l'agent réducteur 7 monté sur le tronçon d'injection et apte à injecter l'agent réducteur 7 dans le tronçon d'injection. Le tronçon d'injection comporte au moins une première coupelle disposée à l'intérieur du canal de circulation dans le trajet du flux de gaz d'échappement de telle sorte que le trajet moyen des veines de gaz d'échappement soit supérieur d'au moins 20% par rapport à la longueur déterminée. Le tronçon d'injection comporte une coupelle disposée à l'intérieur du canal de circulation dans le trajet du flux de gaz d'échappement. Cette coupelle est appelée déversoir. Le déversoir a un fond s'enroulant en spirale autour de la ligne centrale du tronçon d'injection et une grande ouverture à l'extrémité de la spirale la plus écartée de la face amont. L'ouverture est inclinée à la fois par rapport à la ligne centrale et par rapport à un plan perpendiculaire à la ligne centrale. Le diamètre de la coupelle est égal au diamètre intérieur du canal de circulation des gaz d'échappement. Elle s'étend dans toute la section droite du canal de circulation. Le bord périphérique de la coupelle porte contre la surface interne du canal de circulation. La forme spiralée du déversoir initie le mouvement tournant des gaz d'échappement 2, la seule échappatoire étant en aval. Les gaz d'échappement 2 réalisent environ un tour complet.

La ligne d'échappement 4 est notamment encore telle que la ligne d'échappement 4 décrite dans le document FR 2,947,004 qui comprend un conduit chaud et un conduit froid de circulation des gaz d'échappement 2, un élément de découplage mécanique reliant l'extrémité aval du conduit chaud à l'extrémité amont du conduit froid, le catalyseur de réduction 5, et le dispositif d'injection 6 destiné à injecter l'agent réducteur 7 ou à produire l'agent réducteur 7 dans la ligne d'échappement 4 en amont catalyseur de réduction 5, la ligne d'échappement 2 étant caractérisée en ce que le dispositif d'injection 6 et le catalyseur de réduction 5 sont intercalés dans le conduit chaud, en amont de l'élément de découplage mécanique.

Le véhicule automobile est susceptible de se déplacer dans un mode de roulage pour lequel, le moteur à combustion interne 1 est relativement froid, au démarrage de ce dernier notamment. De plus, la ligne d'échappement 4 est susceptible de loger un catalyseur d'oxydation interposé entre le moteur à combustion interne 1 et le catalyseur de réduction 5 ce qui tend à refroidir les gaz d'échappement 2, préalablement à leur arrivée au niveau du catalyseur de réduction 5. Dans l'un et/ou l'autre de ces cas, au niveau du catalyseur de réduction 5, les gaz d'échappement 2 présentent une température de gaz T_{g} qui est inférieure à 150°C, c'est-à-dire en dessous d'une température de catalyseur T_{c} utile de fonctionnement du dispositif d'injection 6 couplé au catalyseur de réduction 5.

La présente invention propose d'équiper le dispositif d'injection 6 d'un moyen de chauffage 8,8' pour augmenter la température de l'agent réducteur 7 lors de sa délivrance à l'intérieur de la ligne d'échappement 4. Dans le cas fréquent où l'agent réducteur 7 comprend de l'urée et de l'eau, un tel chauffage permet d'initier une décomposition de l'agent réducteur 7 à partir d'une évaporation d'eau et d'un début de thermolyse de l'urée.

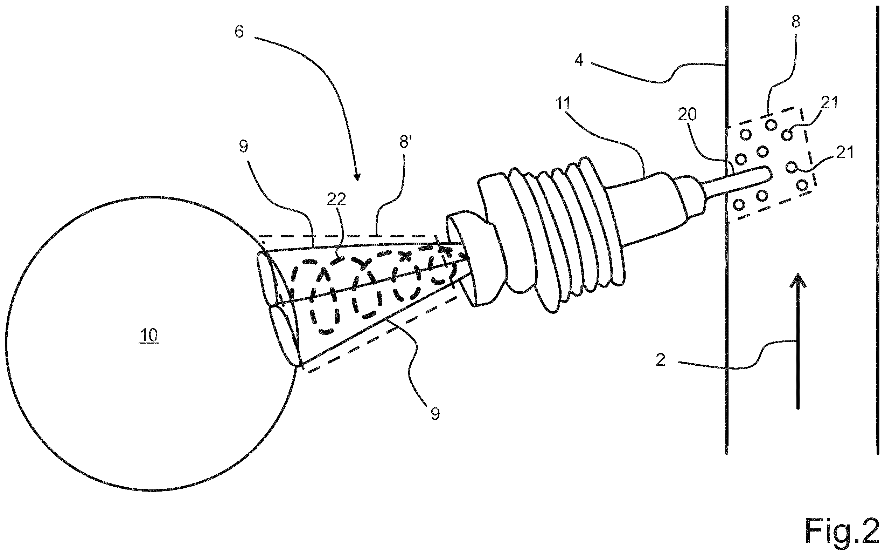

Sur la figure 2, le moyen de chauffage 8,8' comprend un premier moyen de chauffage 8 qui équipe une extrémité de délivrance 20 du dispositif d'injection 6, cette dernière étant léchée par les gaz d'échappement 2 lors de leur circulation à l'intérieur de la ligne d'échappement 4. Autrement dit, l'extrémité de délivrance 20 est logée à l'intérieur de la ligne d'échappement 4, de telle sorte que l'agent réducteur 7 est chauffé après une libération de ce dernier à l'intérieur de la ligne d'échappement 2. Le premier moyen de chauffage 8 est par exemple organisé en un cône de chauffage qui enveloppe l'extrémité de délivrance 20 et qui est pourvu d'au moins une perforation 21 pour le passage des gaz d'échappement 2 à son travers. Le cône de chauffage est indifféremment un cône de chauffage par effet Joule ou par induction.

Sur la figure 2, le moyen de chauffage 8,8' comprend un deuxième moyen de chauffage 8' qui équipe un organe de délivrance 9 de l'agent réducteur 7. L'organe de délivrance 9 loge préférentiellement une rampe de délivrance 22 de l'agent réducteur 7 telle que décrite ci-dessus pour augmenter une distance parcourue par une quelconque goutte d'agent réducteur 7 entre la réserve 10 et l'injecteur 11. La rampe de délivrance 22 est préférentiellement agencée en une portion d'hélice. Selon une forme de réalisation, la rampe de délivrance 22 comprend un tour d'hélice. Selon une autre forme de réalisation, la rampe de délivrance 22 comprend une pluralité de tours d'hélice. L'organe de délivrance 9 est disposé entre une réserve 10 d'agent réducteur 7 et un injecteur 11 d'agent réducteur 7. L'organe de délivrance 9 comprend au moins un cône de délivrance de l'agent réducteur 7. Le deuxième moyen de chauffage 8' est indifféremment constitué d'au moins une résistance chauffante qui est accolée à l'organe de délivrance 9, d'un manchon chauffant qui enveloppe l'organe de délivrance 9 ou bien d'une bobine de chauffage par induction ou analogue. A partir d'un chauffage de l'agent réducteur 7, il est possible de réduire les oxydes d'azote dès la mise marche du moteur à combustion interne 1.

Le moyen de chauffage 8,8' est à même de délivrer une puissance de chauffe qui est comprise entre 100 W et 2 000 W, préférentiellement de l'ordre de 1 200 W à +/- 10% près. Ces dispositions offrent le meilleur compromis possible entre une puissance électrique consommée et une décomposition de l'agent réducteur 7 pour rendre ce dernier efficace afin de réduire les oxydes d'azote à l'intérieur du catalyseur de réduction 5. Le moyen de chauffage 8,8' est activé selon une température de catalyseur T_{c} du catalyseur de réduction 5. Plus particulièrement, l'injection d'agent réducteur 7 à l'intérieur de la ligne d'échappement est placée sous la dépendance de la température de catalyseur T_{c} du catalyseur de réduction 5, dans le sens où l'injection est réalisée dès que la température de catalyseur T_{c} du catalyseur de réduction 5 est supérieure à 100°C.

L'ensemble de ces dispositions est tel que sous une contrainte de volume disponible pour le dispositif d'injection 6, le meilleur compromis est obtenu pour éviter un encrassement du catalyseur de réduction 5 à partir d'une augmentation de la décomposition de l'agent réducteur rendue possible par l'intermédiaire du moyen de chauffage 8,8'. Ces dispositions permettent notamment une réduction des oxydes d'azote NOₓ à faible température du catalyseur de réduction 5 et permettent ainsi une dépollution des gaz d'échappement 2 par exemple en roulage urbain et au démarrage.

## Revendications

1. Dispositif d'injection (6) d'un agent réducteur (7) à l'intérieur d'une ligne d'échappement (4) équipant un moteur à combustion interne (1) dont est pourvu un véhicule automobile (1), le dispositif d'injection (6) comprenant une réserve (10) d'agent réducteur (7) et un injecteur (11) de l'agent réducteur (7) qui comporte une extrémité de délivrance (20) destinée à être logée à l'intérieur de la ligne d'échappement (4), et un organe de délivrance (9) étant interposé entre la réserve (10) et l'injecteur (11), l'organe de délivrance (9) comprenant au moins une rampe de délivrance (22) de l'agent réducteur (7), **caractérisé en ce que** le dispositif d'injection (6) est pourvu d'au moins un premier moyen de chauffage (8) de l'agent réducteur (7) apte à délivrer une puissance de chauffe sous forme d'un cône de chauffage qui enveloppe l'extrémité de délivrance (20) destinée à être logée à l'intérieur de la ligne d'échappement, ledit cône de chauffage étant pourvu d'au moins une perforation (21) pour le passage des gaz d'échappement à son travers.

2. Dispositif selon la revendication précédente, **caractérisé en ce qu'**un deuxième moyen de chauffage (8') équipe l'organe de délivrance (9), notamment en étant accolé à celui-ci ou en étant sous forme d'un manchon chauffant enveloppant l'organe de délivrance ou sous forme d'une bobine de chauffage par induction.

3. Dispositif selon l'une quelconque des revendications précédentes, **caractérisé en ce que** le premier moyen de chauffage (8,8') est apte à délivrer une puissance de chauffe comprise entre 100 W et 2 000 W.

4. Dispositif selon la revendication précédente, **caractérisé en ce que** le moyen de chauffage (8,8') est apte à délivrer une puissance de l'ordre de 1 200 W à +/- 10% près.

5. Dispositif selon l'une quelconque des revendications précédentes, **caractérisé en ce que** le moyen de chauffage (8,8') comprend au moins une résistance chauffante par effet Joule.

6. Dispositif selon l'une quelconque des revendications 1 à 4, **caractérisé en ce que** le moyen de chauffage (8,8') comprend au moins une bobine de chauffage par induction.

7. Ligne d'échappement (4) équipée d'un dispositif d'injection (6) selon l'une quelconque des revendications précédentes.

8. Véhicule automobile comprenant un moteur à combustion interne (1) pourvu d'une ligne d'échappement (4) selon la revendication précédente.

9. Procédé de mise en oeuvre du moyen de chauffage (8,8') constitutif du dispositif d'injection (6) selon l'une quelconque des revendications 1 à 6, **caractérisé en ce que** la mise en oeuvre du moyen de chauffage (8,8') est placé sous la dépendance d'une température (T_{c}) d'un catalyseur de réduction (5) logé à l'intérieur de la ligne d'échappement (4).

## Patentansprüche

1. Vorrichtung (6) zum Einspritzen eines Reduktionsmittels (7) in das Innere einer Abgasanlage (4), die eine Brennkraftmaschine (1) ausstattet, mit der ein Kraftfahrzeug (1) versehen ist, wobei die Einspritzvorrichtung (6) eine Reserve (10) mit Reduktionsmittel (7) und eine Einspritzdüse (11) des Reduktionsmittels (7) umfasst, die ein Abgabeende (20) umfasst, das dazu bestimmt ist, in dem Inneren der Abgasanlage (4) aufgenommen zu sein, und ein Abgabeorgan (9), das zwischen die Reserve (10) und die Einspritzdüse (11) eingefügt ist, wobei das Abgabeorgan (9) mindestens eine Abgaberampe (22) des Reduktionsmittels (7) umfasst, **dadurch gekennzeichnet, dass** die Einspritzvorrichtung (6) mit mindestens einem ersten Heizmittel (8) des Reduktionsmittels (7) versehen ist, das geeignet ist, um eine Heizleistung in Form eines Heizkegels abzugeben, der das Abgabeende (20), das dazu bestimmt ist, in dem Inneren der Abgasablage aufgenommen zu sein, einhüllt, wobei der Heizkegel mit mindestens einer Perforation (21) für das Durchgehen der Abgase versehen ist.

2. Vorrichtung nach dem vorhergehenden Anspruch, **dadurch gekennzeichnet, dass** ein zweites Heizmittel (8') das Abgabeorgan (9) ausstattet, indem es insbesondere an dieses angefügt ist oder die Form eines Heizstutzens hat, der das Abgabeorgan umhüllt, oder die Form einer Induktionsheizspule.

3. Vorrichtung nach einem der vorhergehenden Ansprüche, **dadurch gekennzeichnet, dass** das erste Heizmittel (8, 8') geeignet ist, um eine Heizleistung abzugeben, die zwischen 100 W und 2000 W liegt.

4. Vorrichtung nach dem vorhergehenden Anspruch, **dadurch gekennzeichnet, dass** das Heizmittel (8, 8') geeignet ist, um eine Heizleistung in der Größenordnung von 1200 W auf ± 10 % genau abzugeben.

5. Vorrichtung nach einem der vorhergehenden Ansprüche, **dadurch gekennzeichnet, dass** das Heizmittel (8, 8') mindestens einen Joule-Effekt-Heizwiderstand umfasst.

6. Vorrichtung nach einem der Ansprüche 1 bis 4, **dadurch gekennzeichnet, dass** das Heizmittel (8, 8') mindestens eine Induktionsheizspule umfasst.

7. Abgasanlage (4), die mit einer Einspritzvorrichtung (6) nach einem der vorhergehenden Ansprüche ausgestattet ist.

8. Kraftfahrzeug, das eine Brennkraftmaschine (1) umfasst, die mit einer Abgasanlage (4) nach dem vorhergehenden Anspruch versehen ist.

9. Verfahren zum Umsetzen des Heizmittels (8, 8'), das die Einspritzvorrichtung (6) nach einem der Ansprüche 1 bis 6 bildet, **dadurch gekennzeichnet, dass** das Umsetzen des Heizmittels (8, 8') von einer Temperatur (T_{c}) eines Reduktionskatalysators (5), der in dem Inneren der Abgasanlage (4) untergebracht ist, abhängt.

## Claims

1. A device (6) for injecting a reducing agent (7) into an exhaust line (4) equipping an internal combustion engine (1) with which a motor vehicle (1) is provided, the injection device (6) including a reserve (10) of reducing agent (7) and an injector (11) of the reducing agent (7) which comprises a delivery end (20) intended to be housed inside the exhaust line (4), and a delivery element (9) being interposed between the reserve (10) and the injector (11), the delivery element (9) including at least one delivery ramp (22) of the reducing agent (7), **characterized in that** the injection device (6) is provided with at least a first means (8) for heating the reducing agent (7) able to deliver a heating power in the form of a heating cone which envelops the delivery end (20) intended to be housed inside the exhaust line, said heating cone being provided with at least one perforation (21) for the passage of the exhaust gases through it.

2. The device according to the preceding claim **characterized in that** a second heating means (8') equips the delivery element (9), in particular by being attached thereto or by being in the form of a heating sleeve enveloping the delivery element or in the form of an induction heating coil.

3. The device according to any one of the preceding claims, **characterized in that** the first heating means (8,8') is able to deliver a heating power comprised between 100 W and 2 000 W.

4. The device according to the preceding claim, **characterized in that** the heating means (8,8') is able to deliver a power in the order of 1 200 W +/- 10%.

5. The device according to any one of the preceding claims, **characterized in that** the heating means (8,8') includes at least one Joule effect heating resistor.

6. The device according to any one of Claims 1 to 4, **characterized in that** the heating means (8,8') includes at least one induction heating coil.

7. An exhaust line (4) equipped with an injection device (6) according to any one of the preceding claims.

8. A motor vehicle including an internal combustion engine (1) provided with an exhaust line (4) according to the preceding claim.

9. A method for implementing a heating means (8,8'), being a constituent of the injection device (6) according to any one of Claims 1 to 6, **characterized in that** the implementation of the heating means (8,8') is placed under the dependence of a temperature (T_{c}) of a reduction catalyst (5) housed inside the exhaust line (4).
